(19) Europäisches Patentamt
European Patent Office
Office européen des brevets

(11) **EP 3 908 873 B1**

(12) **FASCICULE DE BREVET EUROPEEN**

(45) Date de publication et mention de la délivrance du brevet:
**28.12.2022 Bulletin 2022/52**

(21) Numéro de dépôt: **20701258.4**

(22) Date de dépôt: **08.01.2020**

(51) Classification Internationale des Brevets (IPC):
**G02B 17/06** (2006.01)   **G01J 5/08** (2022.01)
**G08B 13/193** (2006.01)   **G02B 17/08** (2006.01)

(52) Classification Coopérative des Brevets (CPC):
**G01J 5/0025; G01J 5/07; G01J 5/0806;**
**G02B 17/061; G02B 17/0808; G08B 13/193**

(86) Numéro de dépôt international:
**PCT/EP2020/050310**

(87) Numéro de publication internationale:
**WO 2020/144230 (16.07.2020 Gazette 2020/29)**

(54) **ACCESSOIRE DE VISION DE TRES GRAND ANGLE POUR DETECTEUR INFRAROUGE**

EXTRAWEITWINKEL-BETRACHTUNGSZUBEHÖR FÜR INFRAROTDETEKTOR

VERY WIDE-ANGLE VIEWING ACCESSORY FOR INFRARED DETECTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.01.2019   FR 1900159**

(43) Date de publication de la demande:
**17.11.2021   Bulletin 2021/46**

(73) Titulaire: **Centre Scientifique Et Technique Du Batiment (CSTB)**
**77420 Champs sur Marne (FR)**

(72) Inventeurs:
• **MARTINSONS, Christophe**
  **38660 LE TOUVET (FR)**
• **LEPRETRE, Pierre**
  **38000 GRENOBLE (FR)**

(74) Mandataire: **Nony**
**11 rue Saint-Georges**
**75009 Paris (FR)**

(56) Documents cités:
FR-A1- 2 833 717      FR-A1- 2 847 349
FR-A1- 2 913 778      US-A- 4 439 012
US-A1- 2009 141 344   US-B1- 9 933 604

EP 3 908 873 B1

**Description**

**Domaine technique**

La présente invention concerne le domaine des systèmes optiques comportant un ou plusieurs composants optiques adaptés pour réfléchir ou faire converger ou diverger un rayonnement infrarouge.

L'invention vise plus particulièrement à proposer un dispositif optique simple et peu coûteux qui permette d'élargir le champ de vision d'un détecteur infrarouge sans utiliser de lentilles et sans effet d'obscuration d'une partie du champ de vision.

Sous un autre de ses aspects, l'invention vise également un détecteur de fumée comportant un détecteur infrarouge et le dispositif optique tel que décrit précédemment.

Sous un autre de ses aspects, l'invention concerne également un accessoire optique pouvant être monté ou démonté sur un détecteur infrarouge existant, l'accessoire optique comportant un dispositif optique tel que décrit précédemment.

L'application principale visée par l'invention concerne l'élargissement du champ de vision d'un détecteur infrarouge comprenant un capteur de résolution modérée, comportant par exemple 64x64 ou 80x80 éléments sensibles. Ce type de capteur possède une résolution suffisante pour permettre des applications d'imagerie.

Bien que décrite en référence à l'application principale, l'invention s'applique à tout type de détecteur infrarouge pour lequel existe un besoin d'augmenter de façon simple et peu coûteuse l'angle du champ de vision du détecteur.

**Technique antérieure**

Un dispositif optique connu est décrit dans le document FR 2 847 349 A1. Plusieurs technologies peuvent être utilisées pour fabriquer des capteurs fonctionnant dans le domaine infrarouge. Ainsi, les capteurs pyroélectriques et les thermopiles sont largement utilisés pour des détecteurs de très faible résolution comportant classiquement seulement quelques éléments sensibles. Des capteurs intégrant des micro-bolomètres sont mis en œuvre dans des capteurs de moyenne et haute résolution pouvant servir d'imageurs.

Il existe un intérêt grandissant pour des capteurs de résolution modérée, qui permettent la mise en œuvre de fonctions basiques d'imagerie, telle que la localisation d'une source infrarouge.

De tels capteurs peuvent avoir une résolution comprise entre 16x16 pixels et 80x80 pixels et peuvent fonctionner sur la base de l'une des technologies précitées.

L'exécution de nombreuses fonctions des détecteurs de très faible résolution peut être améliorée par la mise en œuvre de capteurs de résolution modérée. De plus, ce type de capteurs autorise de nouvelles applications.

Une des principales applications des capteurs infrarouges existants, de type pyroélectrique, est la détection de mouvement.

C'est le principe mis en œuvre par exemple par les détecteurs anti-intrusion, qui sont installés dans un grand nombre de bâtiments.

Un système d'alarme anti-intrusion repose typiquement sur un capteur pyroélectrique comportant deux ou quatre éléments sensibles associés à un dispositif optique simple et bon marché définissant le champ de vision du détecteur. Ce dispositif optique peut notamment être une matrice de lentilles de Fresnel réalisée en polyéthylène (PE) ou un ensemble de miroirs réalisés chacun à partir d'un substrat en plastique, tel que du polyméthacrylate de méthyle (PMMA) ou du polycarbonate (PC), métallisé au moins sur sa surface fonctionnelle.

Un détecteur anti-intrusion de ce type est qualifié de détecteur passif car il n'émet aucun rayonnement.

Le fonctionnement d'un détecteur anti-intrusion repose sur l'observation d'une variation simultanée du flux infrarouge ambiant reçu par tous les éléments sensibles du capteur.

Plusieurs configurations de détecteur anti-intrusion sont possibles : une installation au plafond, auquel cas le champ de vision est typiquement de l'ordre de 360° en azimut et d'environ 45° en élévation, de part et d'autre de la verticale, ou une installation murale, auquel cas le champ de vision du détecteur peut être déterminé en fonction de la configuration des murs de la pièce dans laquelle il est installé.

En raison de la faible résolution des capteurs mis en œuvre, ces détecteurs ne peuvent pas donner d'information sur la localisation d'une source infrarouge.

De plus, les limitations inhérentes à la technologie des capteurs pyroélectriques rendent impossible la détection de personnes immobiles ou se déplaçant au pas de course : en effet, pour être détectée, une variation de flux infrarouge doit avoir une fréquence comprise entre 0,5 Hz et 5 Hz environ.

Ainsi, les détecteurs de mouvement sont confrontés à plusieurs limites susceptibles de gêner leur utilisation, parmi lesquelles on pourra citer :

- l'impossibilité d'identifier la localisation de la source du signal infrarouge, sauf éventuellement à mettre en réseau une pluralité de détecteurs : voir par exemple la demande de brevet WO2007/080241 A1 ou le brevet US 8,514,280 B2,

- l'impossibilité d'identifier la forme de la source, par exemple pour distinguer une personne d'un animal, de manière fiable, sauf à utiliser une fois encore une pluralité de détecteurs typiquement associés verticalement : voir par exemple le brevet EP 2405413B1 et la demande de brevet EP1341139 A2;
- l'impossibilité de détecter des personnes immobiles, et
- le déclenchement possible d'un détecteur par une source immobile dont la température change brutalement, par exemple un radiateur ou un mouvement d'air chaud ou froid.

Il existe également des systèmes de surveillance mettant en œuvre un détecteur infrarouge tel que décrit précédemment, qui est couplé à un système de surveillance vidéo, dont la mise en route est pilotée par le déclenchement du détecteur infrarouge.

Les images obtenues par le système vidéo peuvent être transmises vers un téléphone mobile, un ordinateur personnel ou une société de télésurveillance, afin de permettre de lever tout doute sur la cause du déclenchement du détecteur infrarouge.

Ce fonctionnement minimise les risques de déclenchement intempestif de l'alarme, au prix toutefois d'un système de surveillance significativement plus complexe qu'un simple détecteur infrarouge.

Dans ce contexte, l'utilisation de capteurs ayant une résolution modérée, par exemple des capteurs comportant une matrice de 64x64 ou de 80x80 éléments sensibles, peut atténuer les désavantages précités des détecteurs de mouvement en autorisant notamment des fonctionnalités basiques de localisation d'une source et de reconnaissance de forme.

Par conséquent, un capteur infrarouge de résolution modérée permettrait de simplifier les systèmes de surveillance qui mettent en œuvre le couplage d'un détecteur infrarouge à un système vidéo, puisque ce capteur pourrait remplacer à la fois le détecteur infrarouge, le système vidéo ainsi que le système d'éclairage du champ de vision du système vidéo, tout en minimisant les risques de déclenchement intempestif de l'alarme.

Un capteur infrarouge de résolution modérée permet également de s'affranchir des problématiques liées aux questions de vie privée et de confidentialité, puisque la reconnaissance des visages est impossible en raison de la résolution limitée du capteur.

D'autres applications de détecteur infrarouge sont susceptibles de bénéficier de la mise en œuvre de capteurs de résolution modérée, par opposition aux capteurs ne disposant que de quelques éléments sensibles et par conséquent, dépourvus de capacités d'imagerie et de localisation.

Ainsi, il existe pour des alarmes incendie des détecteurs thermo-vélocimétriques, sensibles à une augmentation anormale de la température ambiante qui caractérise la présence d'un foyer de chaleur.

Bien que fiables, ces détecteurs sont limités en ce qu'ils ne permettent pas la localisation du foyer de chaleur. L'utilisation d'un capteur doté de capacités, mêmes limitées d'imagerie, permettrait de pallier cet inconvénient.

Les détecteurs d'occupation, qui contrôlent usuellement l'allumage automatique d'un éclairage, pourraient également bénéficier de capteurs de résolution modérée.

Semblables aux détecteurs anti-intrusion dans leur fonctionnement, les détecteurs d'occupation ne sont en particulier pas sensibles aux sources infrarouges immobiles, telle qu'une personne en posture stationnaire. Cela peut donc conduire un système d'éclairage à s'éteindre, en dépit de la présence réelle de personnes dans la pièce concernée.

D'autres systèmes encore, tels que des climatiseurs, peuvent tirer parti d'une fonction d'imagerie à basse résolution, par exemple pour estimer le nombre d'occupants d'une pièce.

La société Mitsubishi Electric commercialise ainsi un climatiseur doté d'un capteur comportant huit thermopiles, agencées verticalement.

Le capteur est mû en rotation par un moteur afin de balayer la pièce et de constituer une image infrarouge de la pièce.

Un tel système pourrait être avantageusement remplacé par un capteur à résolution modérée doté d'une vision grand angle, afin d'éviter l'introduction d'un mécanisme relativement complexe de motorisation.

De plus, un intérêt grandissant pour des applications de comptage de personnes ou de gestion de files d'attente peut être constaté, par exemple pour des raisons de sécurité ou de gestion d'espace.

Dans ce cadre, la société Irisys a développé un capteur pyroélectrique de résolution 16x16 pixels.

Ce capteur, qui peut par exemple être installé au-dessus d'une file d'attente d'un magasin, est associé à une lentille en germanium ou en verre de chalcogènure qui permet d'obtenir un champ de vision ayant un angle limité, de l'ordre de 50° à 60°.

La résolution du capteur, bien que relativement faible, est néanmoins suffisante pour obtenir une bonne approximation du nombre de personnes et de leur localisation dans la file d'attente.

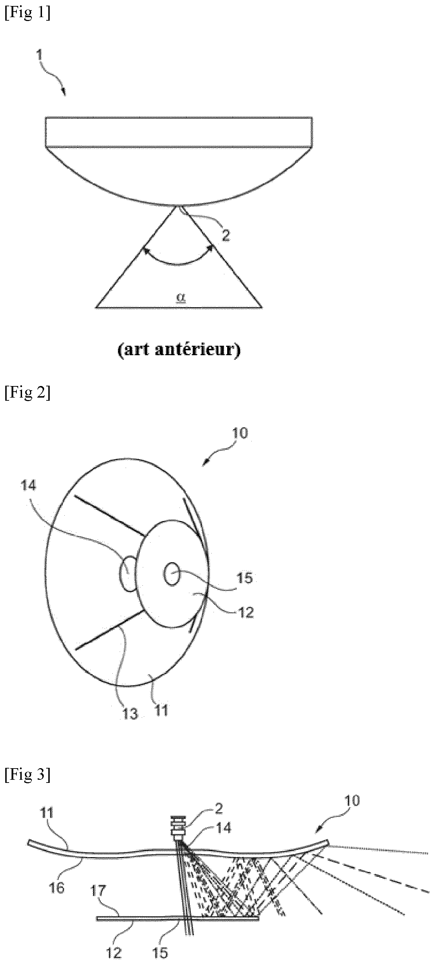

La figure 1 représente de manière schématique un détecteur infrarouge 1 selon l'état de l'art, comportant un imageur de résolution modérée et destiné à être fixé à un plafond.

Le rayonnement infrarouge entre dans le détecteur à travers le système optique 2, qui comporte notamment une lentille de focalisation à l'entrée et un capteur infrarouge.

L'angle α du champ de vision d'un tel détecteur est classiquement compris entre 70° et 90°.

Cependant, la mise en œuvre de capteurs de résolution modérée tels que décrits précédemment, capables de permettre des fonctionnalités basiques d'imagerie, reste commercialement difficile.

En particulier, le coût d'un capteur de ce type et des composants optiques infrarouges à grand angle nécessaires pour les applications visées constituent des obstacles importants à une commercialisation de ce type de solutions.

Ainsi, en raison du coût élevé des optiques adaptées au rayonnement infrarouge, tels que les lentilles en germanium ou en verres de chalcogénure, les détecteurs intégrant des imageurs de résolution modérée existants ont un champ de vision relativement restreint, ne dépassant typiquement pas un angle de l'ordre de 70° à 90°.

Il est possible d'obtenir un angle atteignant jusqu'à 120° en utilisant une lentille asphérique optimisée, au prix toutefois d'un degré de distorsion important et une grande hétérogénéité de l'éclairement du capteur.

Il existe donc un besoin d'améliorer l'amplitude du champ de vision des capteurs infrarouge existants, notamment pour pallier les inconvénients des solutions existantes.

Le but de l'invention est de répondre à ce besoin.

**Exposé de l'invention**

Pour ce faire, l'invention a pour objet un dispositif optique, destiné à être agencé sur un détecteur muni d'un capteur infrarouge pour augmenter l'angle du champ de vision du détecteur, comportant :

- un miroir primaire de forme générale circulaire, comportant en son centre une ouverture circulaire,
- un miroir secondaire de forme générale circulaire et de diamètre inférieur au diamètre du miroir primaire, comportant en son centre une ouverture circulaire,
- au moins un moyen de liaison pour lier le miroir primaire et le miroir secondaire, de telle sorte que la surface réfléchissante du miroir primaire est agencée en regard de la surface réfléchissante du miroir secondaire,

les miroirs primaire et secondaire étant adaptés pour réfléchir des rayonnements dans l'infrarouge ; et les miroirs primaire et secondaire étant configurés pour former un système optique afocal et pour former une image continue de très grand angle avec le centre de l'image obtenu par les ouvertures circulaires centrales, l'angle (a) du champ de vision du dispositif étant supérieur à 90°.

Ainsi, l'invention consiste essentiellement en l'utilisation de deux miroirs en regard l'un de l'autre, le miroir primaire recueillant le rayonnement infrarouge en provenance d'un champ de vision de grand angle pour le renvoyer sur le miroir secondaire, qui à son tour le réfléchit vers le capteur du détecteur infrarouge.

Les ouvertures centrales permettent d'éviter toute obscuration centrale de l'image telle que celle produite par un système optique à deux miroirs classique, du type télescope de Cassegrain.

L'image obtenue consiste en une partie périphérique formée par les miroirs et une partie centrale traversant les miroirs par les ouvertures centrales, l'image étant continue, c'est-à-dire sans discontinuité entre la partie périphérique et la partie centrale.

Cela est rendu possible par le fait que les miroirs primaire et secondaire forment un système optique afocal. Ceci permet aux rayons formant la partie périphérique et aux rayons formant la partie centrale d'être focalisés de la même manière par une lentille de focalisation du capteur du détecteur sur lequel le dispositif selon l'invention est destiné à être agencé.

Pour que l'ensemble constitué du miroir primaire et du miroir secondaire soit afocal, il est nécessaire que la courbure du premier miroir compense la courbure du miroir secondaire. Ainsi, les miroirs ne font que réfléchir les rayons incidents sans les focaliser : la fonction de focalisation est réalisée par la lentille du détecteur.

On forme ainsi une image continue de très grand angle, au moyen d'un dispositif simple, compact et peu coûteux de fabrication.

Par « image continue de très angle », on entend ici et dans le cadre de l'invention, une image sans discontinuité, sans obscuration et dont l'angle de champ est très grand, de préférence au moins égal à 120° et jusqu'à 360°.

Les surfaces réfléchissantes des miroirs sont configurées pour remplir cette fonction.

De manière avantageuse, l'image obtenue par le dispositif optique selon l'invention ne comporte pas de zone d'ombre due à une éventuelle obscuration centrale du champ de vision: en effet, la présence d'ouvertures centrales dans les miroirs primaire et secondaire ainsi que la configuration des miroirs permettent d'obtenir une image continue, et donc sans obscuration centrale du centre de l'image.

Avantageusement, l'utilisation de miroirs permet d'une part d'éviter l'utilisation de lentilles infrarouges, coûteuses, et d'autre part d'obtenir une optique réflective afocale.

En outre, des corrections asphériques de l'image peuvent être obtenues.

Grâce à l'invention, on obtient donc un dispositif optique infrarouge de large champ de vision et qui permet d'obtenir avec un détecteur infrarouge selon l'état de l'art une image nette, corrigée et sans obscuration centrale du centre de l'image. De plus, l'encombrement du dispositif est significativement réduit par rapport à un dispositif comportant une optique panoramique réfractive de type « fisheye » utilisant des lentilles.

Selon un mode de réalisation particulier, l'angle du champ de vision du dispositif est supérieur à 140°, de préférence supérieur à 165°.

Selon un mode de réalisation spécifique de l'invention, les surfaces réfléchissantes du miroir primaire et du miroir secondaire ont chacune un profil radial connu sous la dénomination d' « *extended odd asphere* » défini par l'équation :

[Math 1]

$$z(r) = \frac{cr^2}{1 + \sqrt{1 - (1+k)c^2r^2}} + \sum_{i=1}^{N} \alpha_i \rho^i.$$

Cette équation définit la hauteur z du profil en fonction de la distance radiale r au centre du miroir. $\rho$ est la coordonnée radiale normalisée et les coefficients N, c, k, $\alpha_i$ sont constants.

De préférence, le dispositif optique selon l'invention est constitué d'une seule pièce en matière plastique moulée par injection, tel que du polyméthylacrylate de méthyle (PMMA) ou du polycarbonate (PC), au moins les surfaces du miroir primaire et du miroir secondaire étant métallisées.

L'invention concerne également un détecteur infrarouge comprenant un dispositif optique tel que décrit précédemment, agencé de manière à augmenter l'angle du champ de vision du détecteur.

L'invention se rapporte en outre à un détecteur de fumée comportant un détecteur infrarouge tel que décrit précédemment.

L'invention concerne l'utilisation de ce détecteur de fumée pour la détection ou la localisation de points chauds et pour la mesure de la vitesse de changement de température de parois, ainsi que l'utilisation de ce détecteur de fumée pour détecter la présence d'occupants dans une pièce enfumée et pour compter les occupants.

L'invention concerne aussi l'utilisation d'un dispositif optique tel que décrit précédemment pour l'aide à la conduite de nuit par vision infrarouge nocturne ou pour la gestion du confort thermique dans l'habitacle d'un véhicule ou pour la détection de piétons et de véhicules automobiles ou pour la surveillance de lieux sensibles.

Enfin, l'invention concerne un accessoire optique destiné à être agencé sur un détecteur infrarouge, comportant un dispositif optique tel que décrit précédemment et un mécanisme d'accroché du dispositif optique sur le détecteur infrarouge.

**Brève description des dessins**

La figure 1 est une vue schématique de profil d'un détecteur infrarouge selon l'état de l'art;
La figure 2 est une vue schématique d'un dispositif optique selon l'invention;
La figure 3 illustre un dispositif optique selon l'invention dans une vue en coupe;
La figure 4 est une vue schématique d'un dispositif optique selon l'invention agencé sur un détecteur infrarouge selon l'état de l'art ;
La figure 5 est une vue de profil d'un dispositif optique selon l'invention agencé sur un détecteur infrarouge selon l'état de l'art ;
La figure 6 est une image obtenue par un détecteur infrarouge selon l'état de l'art
; La figure 7 est une simulation de l'image obtenue par un détecteur infrarouge selon l'état de l'art sur lequel est agencé un dispositif optique selon l'invention ;
La figure 8 représente un détecteur de fumée muni d'un dispositif optique selon l'invention.

**Description détaillée**

Dans l'ensemble de la présente demande, les termes « vertical », « inférieur », « supérieur », « bas », « haut », « dessous » et « dessus » sont à comprendre par référence à un détecteur infrarouge en configuration de fonctionnement installé sur un plafond et faisant face au sol. Ainsi, dans une configuration de fonctionnement, le capteur du détecteur infrarouge fait face au sol dans la direction verticale.

La figure 1 a déjà été décrite en préambule et n'est donc pas commentée ci-après.

On décrit maintenant, en référence aux figures 2 à 5, un dispositif optique selon l'invention.

Le dispositif optique 10 comporte un miroir primaire 11, un miroir secondaire 12 et des moyens de liaison 13 pour lier le miroir primaire et le miroir secondaire.

Dans le mode de réalisation illustré, les moyens de liaison 13 sont des moyens de liaison rigides, constitués par quatre supports de forme allongée, répartis équi-angulairement, chacun attaché par une de leurs extrémités au miroir primaire et par l'autre extrémité au miroir secondaire.

Le miroir primaire 11 comporte une ouverture centrale 14 ainsi qu'une surface réfléchissante 16. Le miroir secondaire 12 comporte une ouverture centrale 15 ainsi qu'une surface réfléchissante 17.

Les surfaces réfléchissantes 16 et 17 sont agencées en regard l'une de l'autre.

Les ouvertures centrales 14 et 15 sont en regard l'une de l'autre et permettent avantageusement de laisser passer le rayonnement infrarouge ayant un angle d'inclinaison proche de 0° par rapport à la verticale. Cela apparaît plus clairement sur la figure 3, dans laquelle le tracé de rayons optiques montre le passage de rayons à travers les ouvertures centrales 14, 15.

De cette manière, le dispositif optique selon l'invention évite toute obscuration centrale du champ de vision par le miroir secondaire 12.

Les surfaces réfléchissantes 16, 17 sont configurées pour permettre l'obtention d'une image de grand angle, nette et continue, avec des corrections asphériques.

Comme visible en figure 3, la surface du miroir primaire 11 a notamment un profil bombé sur une partie radialement extérieure. Ce profil est tel que les rayons incidents, même ceux ayant une incidence fortement rasante, sont renvoyés sur le miroir secondaire 12, dont le profil est adapté pour diriger les rayons sur le système optique 2 du détecteur.

De cette manière, l'angle $\alpha$ du champ de vision du détecteur équipé d'un dispositif optique selon l'invention peut atteindre de préférence 140° à 170°. L'angle $\alpha$ peut également dépasser 180°, mais cela conduirait un détecteur installé sur un plafond à observer en partie ce plafond. Il peut toutefois être utile que l'angle dépasse 180° dans le cadre d'applications autres que celle d'un détecteur installé sur un plafond.

Les deux miroirs 11, 12 forment de manière avantageuse un dispositif afocal.

Les ouvertures centrales 14, 15 et les surfaces réfléchissantes 16, 17 sont configurées pour que l'image reçue par le détecteur soit continue.

En effet, le capteur infrarouge du système optique 2 du détecteur 1 reçoit d'une part un rayonnement directement issu de l'environnement à observer à travers les ouvertures centrales 14, 15, et d'autre part un rayonnement reflété par le miroir primaire 11 et le miroir secondaire 12. La configuration des ouvertures centrales 14, 15 et des surfaces réfléchissantes 16, 17 est définie, de manière à ce que l'image formée sur le capteur soit continue.

En particulier, la surface réfléchissante du miroir primaire est configurée de manière à ce que sa courbure compense la courbure de la surface réfléchissante du miroir secondaire. Les miroirs ne font donc que réfléchir le rayonnement incident sans le focaliser, et forment donc un système afocal. Cela permet d'obtenir une image continue avec les rayons formant le centre de l'image, qui traversent les ouvertures centrales 14, 15 sans être réfléchis, car les rayons, réfléchis ou non, sont focalisés de la même manière par la lentille de focalisation du détecteur infrarouge.

Par exemple, afin d'obtenir ce résultat, les coefficients de l'équation de profil « *extended odd asphere* » du miroir primaire peuvent être les suivants :

$$N = 4 \; ;$$

Rayon de normalisation p: 40, 36 mm;

$$c = 2{,}34\text{x}10^{-2} \, \text{mm}^{-1};$$

$$k = 0 \; ;$$

$$\alpha_1 = -2{,}21 \; \text{mm};$$

$$\alpha_2 = -2{,}63\text{x}10^{1} \; \text{mm};$$

$$\alpha_3 = 1{,}25 \text{x} 10^1 \text{ mm;}$$

$\alpha_4$ = 6,75 mm.

Les coefficients de l'équation de profil « *extended odd asphere* » du miroir secondaire correspondant peuvent être les suivants :

$$N = 4 \text{ ;}$$

Rayon de normalisation p: 1037,5 mm ;

$$c = 2{,}66 \text{x} 10^{-3} \text{ mm}^{-1} \text{ ;}$$

$$k = 0 \text{ ;}$$

$$\alpha_1 = -6{,}02 \text{x} 10^1 \text{ mm;}$$

$$\alpha_2 = 6{,}80 \text{x} 10^2 \text{ mm;}$$

$$\alpha_3 = 6{,}23 \text{x} 10^4 \text{ mm;}$$

$$\alpha_4 = 2{,}55 \text{x} 10^6 \text{ mm.}$$

Le diamètre du miroir primaire peut alors être de 57 mm, le diamètre du miroir secondaire peut être de 36,8 mm et la distance entre les deux miroirs peut être de 23,8 mm.

La figure 3 illustre un exemple de profil radial du miroir primaire et du miroir secondaire.

Le dispositif optique 10 est de préférence réalisé en une seule pièce en matière plastique moulée par injection, tel que du polyméthacrylate de méthyle (PMMA) ou du polycarbonate (PC). Toute la pièce, ou a minima les surfaces réfléchissantes des miroirs, sont ensuite métallisées, afin de pouvoir réfléchir un rayonnement infrarouge incident.

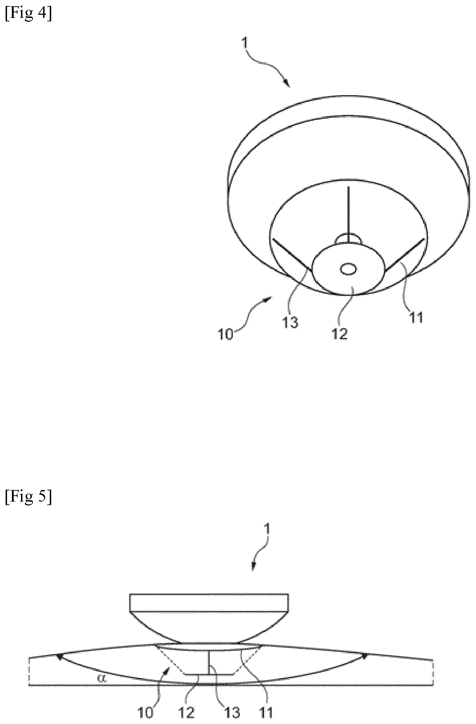

Les figures 4 et 5 représentent schématiquement un dispositif optique 10 selon l'invention agencé sur un détecteur infrarouge 1.

Afin de fixer le dispositif optique 10 au détecteur 1, un mécanisme d'accroché peut être prévu. Ce mécanisme peut par exemple comporter un dôme hémisphérique semi-transparent en polyéthylène (PE) de faible épaisseur, typiquement proche de 0,5 mm pour transmettre efficacement le rayonnement infrarouge.

Le miroir secondaire est solidaire de la face interne du dôme et ce dernier est rattaché à la base du détecteur, recouvrant ainsi le dispositif.

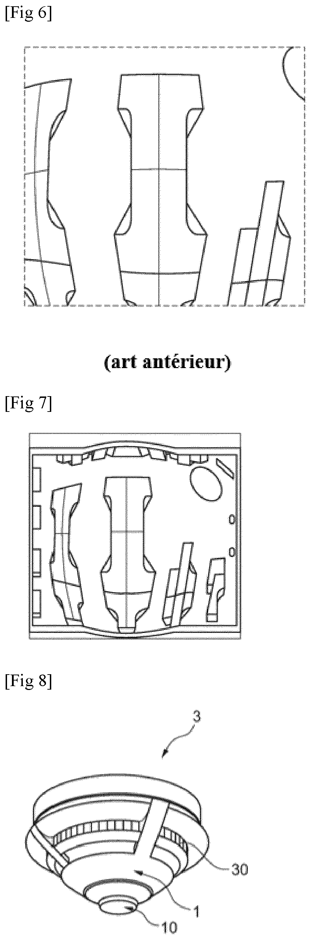

La figure 6 est une image obtenue par un détecteur infrarouge selon l'état de l'art, avec un champ de vision dirigé vers le sol et dont l'angle $\alpha$ ne dépasse pas 90°.

La figure 7 montre pour comparaison le résultat d'une simulation informatique reproduisant l'effet obtenu par la mise en place d'un dispositif optique selon l'invention sur le détecteur infrarouge utilisé pour l'obtention de l'image de la figure 6.

On constate que l'angle du champ de vision est considérablement augmenté par l'utilisation d'un dispositif optique selon l'invention.

Ainsi, grâce à l'invention, un dispositif optique simple, compact et ne comportant pas de lentilles peut être utilisé pour augmenter le champ de vision d'un détecteur infrarouge.

Il peut s'agir d'un accessoire que l'on installe sur un détecteur existant. L'installation d'un dispositif optique sur un détecteur est aisée. En effet, la lentille de focalisation d'origine du détecteur existant ne nuit pas à la mise en œuvre de l'obtention de l'image continue de très angle selon l'invention.

De plus, aucune connexion électrique supplémentaire n'est nécessaire.

Enfin, la précision du positionnement du dispositif optique est de l'ordre de la taille d'un élément sensible du capteur infrarouge. Pour un capteur de résolution 64x64 ou 80x80, la précision du positionnement est de l'ordre de 20

à 30 μm, ce qui peut facilement être obtenu avec un mécanisme d'accroché connu de l'art antérieur.

Comme illustré en figure 8, un autre aspect de l'invention concerne un détecteur de fumée 3 comportant à son extrémité inférieure un dispositif optique 10 selon l'invention, ainsi qu'un détecteur infrarouge 1.

Le détecteur de fumée 3 comporte une chambre de détection de fumée 30 : la fonction de détection de fumée est identique à celle d'un détecteur de fumée selon l'état de l'art.

Cependant, l'intégration d'un détecteur infrarouge 1 équipé d'un dispositif optique selon l'invention a plusieurs avantages. Cela permet en premier lieu d'améliorer les capacités du détecteur de fumée par la détection ou la localisation de points anormalement chauds d'une part, et d'autre part par la surveillance de la thermo-vélocimétrie des murs, c'est-à-dire la vitesse d'élévation de leur température.

Grâce au large champ de vision infrarouge, le détecteur de fumée 3 peut remplir une fonction d'alarme pré-incendie en surveillant une zone étendue.

D'autre part, lorsque le détecteur de fumée signale la présence de fumée, le détecteur infrarouge intégré est capable d'identifier une présence éventuelle d'occupants et de dénombrer ceux-ci, donnant accès à des informations cruciales en cas d'incendie dont peuvent bénéficier une centrale d'alarme incendie ou une équipe de secours. En effet, la fumée occulte bien moins le rayonnement infrarouge que la lumière visible ou proche infrarouge utilisée par les systèmes de vidéosurveillance existants.

Enfin, l'intégration de plusieurs fonctions au sein d'un même détecteur a pour résultat d'éviter la multiplication inesthétique de détecteurs installés aux plafonds.

L'installation d'un détecteur de fumée est dans, de nombreux cas, obligatoire. Or un détecteur de fumée est usuellement installé au centre d'une pièce, ce qui constitue une position favorable pour un dispositif à large champ de vision.

Il est donc particulièrement avantageux d'intégrer un détecteur infrarouge équipé d'un dispositif optique selon l'invention à un détecteur fumée.

D'autres variantes et avantages de l'invention peuvent être réalisés sans pour autant sortir du cadre de l'invention. L'invention n'est ainsi pas limitée aux exemples décrits précédemment.

Bien que décrite en référence à l'application principale visée, à savoir augmenter l'angle du champ de vision d'un détecteur infrarouge installé au plafond d'une pièce, l'invention est également applicable à tout domaine dans lequel il est avantageux d'élargir le champ de vision d'un appareil de vision infrarouge au moyen d'un dispositif optique simple et peu coûteux.

Ainsi, le dispositif optique décrit peut aussi être utilisé dans le domaine automobile et des transports (par exemple dans le cadre des aides à la conduite de nuit par vision infrarouge nocturne ou dans le cadre de la gestion du confort thermique dans l'habitacle d'un véhicule automobile) ou dans le domaine de la ville intelligente (par exemple dans le cadre d'un système d'éclairage public pour la détection de piétons et de véhicules automobiles ou dans le cadre de la surveillance de lieux sensibles).

Il peut également être utilisé dans le domaine de la détection de présence pour l'éclairage d'une pièce : de manière avantageuse, un unique détecteur comportant un dispositif optique selon l'invention pourrait couvrir un grand volume de détection, par exemple une vaste salle de réunion ou un grand local.

## Revendications

1. Dispositif optique (10), destiné à être agencé sur un détecteur (1) muni d'un capteur infrarouge pour augmenter l'angle du champ de vision du détecteur, comportant :

   - un miroir primaire (11) de forme générale circulaire, comportant en son centre une ouverture circulaire (14),
   - un miroir secondaire (12) de forme générale circulaire et de diamètre inférieur au diamètre du miroir primaire, comportant en son centre une ouverture circulaire (15),
   - au moins un moyen de liaison (13) pour lier le miroir primaire et le miroir secondaire, de telle sorte à agencer la surface réfléchissante du miroir primaire (16) en regard de la surface réfléchissante du miroir secondaire (17),

   les miroirs primaire et secondaire étant adaptés pour réfléchir des rayonnements dans l'infrarouge ; et
   le miroir primaire et le miroir secondaire étant configurés pour former un système afocal et pour former une image continue de très grand angle avec le centre de l'image obtenu par les ouvertures circulaires centrales, l'angle (a) du champ de vision du dispositif étant supérieur à 90°.

2. Dispositif optique selon la revendication 1, l'angle du champ de vision (a) du dispositif étant supérieur à 140°, de préférence supérieur à 165°.

3. Dispositif optique selon l'une des revendications précédentes, la surface réfléchissante du miroir primaire et la surface réfléchissante du miroir secondaire ayant chacune un profil radial défini par l'équation:

$$z(r) = \frac{cr^2}{1+\sqrt{1-(1+k)c^2r^2}} + \sum_{i=1}^{N} \alpha_i \rho^i,$$

où z est la hauteur du profil en fonction de la distance radiale r au centre du miroir, $\rho$ est la coordonnée radiale normalisée et les coefficients N, c, k, $\alpha_i$ sont constants.

4. Dispositif optique selon l'une des revendications précédentes, constitué d'une seule pièce en matière plastique moulée par injection, tel que du polyméthacrylate de méthyle (PMMA) ou du polycarbonate (PC), au moins les surfaces du miroir primaire et du miroir secondaire étant métallisées.

5. Détecteur infrarouge comprenant un dispositif optique selon l'une des revendications précédentes, agencé de manière à augmenter l'angle du champ de vision du détecteur.

6. Détecteur de fumée comportant un détecteur infrarouge selon la revendication 5.

7. Utilisation d'un détecteur de fumée selon la revendication 6 pour la détection ou la localisation de points chauds et pour la mesure de la vitesse de changement de température de parois.

8. Utilisation d'un détecteur de fumée selon la revendication 6 pour détecter la présence d'occupants dans une pièce enfumée et pour compter les occupants.

9. Utilisation du dispositif optique selon l'une des revendications 1 à 4 pour l'aide à la conduite de nuit par vision infrarouge nocturne ou pour la gestion du confort thermique dans l'habitacle d'un véhicule ou pour la détection de piétons et de véhicules automobiles ou pour la surveillance de lieux sensibles.

10. Accessoire optique destiné à être agencé sur un détecteur infrarouge, comportant un dispositif optique selon l'une des revendications 1 à 4 et un mécanisme d'accroché du dispositif optique sur le détecteur infrarouge.


**Patentansprüche**

1. Optische Vorrichtung (10), die dazu bestimmt ist, an einem Detektor (1) angeordnet zu werden, der mit einem Infrarotsensor versehen ist, um den Winkel des Sichtfeldes des Detektors zu vergrößern, und umfasst:

   - einen Primärspiegel (11) mit allgemeiner Kreisform, der in seiner Mitte eine kreisförmige Öffnung (14) umfasst,
   - einen Sekundärspiegel (12) mit allgemeiner Kreisform und kleinerem Durchmesser als dem Durchmesser des Primärspiegels, der in seiner Mitte eine kreisförmige Öffnung (15) umfasst,
   - mindestens ein Verbindungsmittel (13) zum Verbinden des Primärspiegels und des Sekundärspiegels derart, dass die reflektierende Oberfläche des Primärspiegels (16) zur reflektierenden Oberfläche des Sekundärspiegels (17) angeordnet ist,
   wobei der Primär- und Sekundärspiegel dazu geeignet sind, Infrarotstrahlen zu reflektieren; und
   der Primärspiegel und der Sekundärspiegel so konfiguriert sind, dass sie ein afokales System bilden und ein fortlaufendes Bild mit Extraweitwinkel mit der Mitte des Bildes bilden, das durch die mittigen kreisförmigen Öffnungen erhalten wird, wobei der Winkel ($\alpha$) des Sichtfeldes der Vorrichtung größer als 90° ist.

2. Optische Vorrichtung nach Anspruch 1, wobei der Winkel des Sichtfeldes ($\alpha$) der Vorrichtung größer als 140° ist, vorzugsweise größer als 165°.

3. Optische Vorrichtung nach einem der vorhergehenden Ansprüche, wobei die reflektierende Oberfläche des Primärspiegels und die reflektierende Oberfläche des Sekundärspiegel jeweils ein Radialprofil aufweisen, das definiert ist durch die Gleichung:

$$z(r) = \frac{cr^2}{1 + \sqrt{1 - (1+k)c^2r^2}} + \sum_{i=1}^{N} \alpha_i \rho^i$$

wobei z die Höhe des Profils in Abhängigkeit vom radialen Abstand r zur Mitte des Spiegels ist, $\rho$ die normalisierte radiale Koordinate ist und die Koeffizienten N, c, k, $\alpha_i$ Konstanten sind.

4. Optische Vorrichtung nach einem der vorhergehenden Ansprüche, die aus einem einzigen Teil aus spritzgegossenem Kunststoff besteht, wie etwa Polymethylmethacrylat (PMMA) oder Polycarbonat (PC), wobei mindestens die Oberflächen des Primärspiegels und des Sekundärspiegels metallüberzogen sind.

5. Infrarotdetektor, der eine optische Vorrichtung nach einem der vorhergehenden Ansprüche umfasst und so angeordnet ist, dass er den Winkel des Sichtfeldes des Detektors vergrößert.

6. Rauchdetektor, der einen Infrarotdetektor nach Anspruch 5 umfasst.

7. Verwendung eines Rauchdetektors nach Anspruch 6 zur Detektion oder Lokalisierung heißer Stellen und zur Messung der Änderungsgeschwindigkeit von Wandtemperaturen.

8. Verwendung eines Rauchdetektors nach Anspruch 6 zum Detektieren der Anwesenheit von Aufenthaltspersonen in einem verrauchten Raum und zum Zählen der Aufenthaltspersonen.

9. Verwendung der optischen Vorrichtung nach einem der Ansprüche 1 bis 4 zur Hilfe beim Fahren bei Nacht durch Infrarot-Nachtsicht oder zur Steuerung des Wärmekomforts im Innenraum eines Fahrzeugs oder zur Detektion von Fußgängern und Kraftfahrzeugen oder zur Überwachung sensibler Orte.

10. Optisches Zubehör, das dazu bestimmt ist, an einem Infrarotdetektor angeordnet zu werden, und eine optische Vorrichtung nach einem der Ansprüche 1 bis 4 und einen Mechanismus zur Befestigung der optischen Vorrichtung am Infrarotdetektor umfasst.

**Claims**

1. Optical device (10), intended to be arranged on a detector (1) equipped with an infrared sensor in order to increase the angle of the field of view of the detector, comprising:

   - a primary mirror (11) of circular overall shape, comprising a circular opening (14) at its centre,
   - a secondary mirror (12) of circular overall shape and of diameter smaller than the diameter of the primary mirror, comprising a circular opening (15) at its centre,
   - at least one connecting means (13) for connecting the primary mirror and the secondary mirror, so as to arrange the reflective surface of the primary mirror (16) facing the reflective surface of the secondary mirror (17), the primary and secondary mirrors being designed to reflect radiation in the infrared; and
   the primary mirror and the secondary mirror being configured to form an afocal system and to form a continuous very wide-angle image with the centre of the image obtained by the central circular openings, the angle ($\alpha$) of the field of view of the device being greater than 90°.

2. Optical device according to Claim 1, the angle of the field of view (a) of the device being greater than 140°, preferably greater than 165°.

3. Optical device according to one of the preceding claims, the reflective surface of the primary mirror and the reflective surface of the secondary mirror each having a radial profile defined by the equation:

$$z(r) = \frac{cr^2}{1 + \sqrt{1 - (1+k)c^2r^2}} + \sum_{i=1}^{N} \alpha_i \rho^i,$$

where z is the height of the profile as a function of the radial distance r to the centre of the mirror, $\rho$ is the normalized

radial coordinate and the coefficients N, c, k, $\alpha_i$ are constants.

4. Optical device according to one of the preceding claims, consisting of a single piece of injection-moulded plastic, such as polymethyl methacrylate (PMMA) or polycarbonate (PC), at least the surfaces of the primary mirror and of the secondary mirror being metallized.

5. Infrared detector comprising an optical device according to one of the preceding claims, arranged in such a way as to increase the angle of the field of view of the detector.

6. Smoke detector comprising an infrared detector according to Claim 5.

7. Use of a smoke detector according to Claim 6 to detect or locate hotspots and to measure the rate of change of wall temperature.

8. Use of a smoke detector according to Claim 6 to detect the presence of occupants in a smoke-filled room and to count the number of occupants.

9. Use of the optical device according to one of Claims 1 to 4 to assist with night driving using infrared night vision or to manage the thermal comfort in the interior of a vehicle or to detect pedestrians and motor vehicles or to monitor sensitive sites.

10. Optical accessory intended to be arranged on an infrared detector, comprising an optical device according to one of Claims 1 to 4 and a mechanism for attaching the optical device to the infrared detector.

[Fig 1]

**(art antérieur)**

[Fig 2]

[Fig 3]

EP 3 908 873 B1

[Fig 4]

[Fig 5]

[Fig 6]

**(art antérieur)**

[Fig 7]

[Fig 8]

**RÉFÉRENCES CITÉES DANS LA DESCRIPTION**

**Documents brevets cités dans la description**

- FR 2847349 A1
- WO 2007080241 A1
- US 8514280 B2
- EP 2405413 B1
- EP 1341139 A2